(19) **Europäisches Patentamt**
**European Patent Office**
**Office européen des brevets**

(11) **EP 4 031 434 B1**

(12) **EUROPÄISCHE PATENTSCHRIFT**

(45) Veröffentlichungstag und Bekanntmachung des Hinweises auf die Patenterteilung:
**31.12.2025 Patentblatt 2026/01**

(21) Anmeldenummer: **20816102.6**

(22) Anmeldetag: **11.11.2020**

(51) Internationale Patentklassifikation (IPC):
**G01C 21/00** *(2006.01)* **B61L 25/02** *(2006.01)*
**G01C 21/30** *(2006.01)* **G01S 19/50** *(2010.01)*
**B61L 15/00** *(2006.01)* **G08G 1/16** *(2006.01)*

(52) Gemeinsame Patentklassifikation (CPC):
**B61L 25/025; B61L 15/0081; B61L 25/026;**
**G01C 21/005;** B61L 2205/04; G08G 1/167

(86) Internationale Anmeldenummer:
**PCT/EP2020/081689**

(87) Internationale Veröffentlichungsnummer:
**WO 2021/104860 (03.06.2021 Gazette 2021/22)**

(54) **FAHRZEUG, INSBESONDERE SCHIENENGEBUNDEN, UND VERFAHREN ZUM FESTSTELLEN OB DAS FAHREUG EINE VORGEGEBEN ROUTE VERLASSEN HAT**

VEHICLE, IN PARTICULAR RAIL-MOUNTED, AND METHOD FOR DETERMINING WHETHER THE VEHICLE HAS LEFT A PREDEFINED ROUTE

VÉHICULE, EN PARTICULIER SUR RAILS, ET PROCÉDÉ POUR DÉTERMINER SI LE VÉHICULE A QUITTÉ UN ITINÉRAIRE PRÉDÉFINI

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **29.11.2019 DE 102019218611**

(43) Veröffentlichungstag der Anmeldung:
**27.07.2022 Patentblatt 2022/30**

(73) Patentinhaber: **Siemens Mobility GmbH**
**80997 München (DE)**

(72) Erfinder: **PROBST, Sebastian**
**90408 Nürnberg (DE)**

(74) Vertreter: **Siemens Patent Attorneys**
**Postfach 22 16 34**
**80506 München (DE)**

(56) Entgegenhaltungen:
DE-A1- 102017 210 131 DE-A1- 102018 207 634
US-A1- 2006 058 957 US-A1- 2010 312 461
US-A1- 2016 216 124 US-A1- 2017 096 778

**Beschreibung**

Die Erfindung bezieht sich auf ein Verfahren zum Betreiben eines Fahrzeugs, insbesondere eines Schienenfahrzeugs.

Aus der deutschen Offenlegungsschrift DE 103 38 234 A1 ist ein Verfahren zum Orten von Schienenfahrzeugen bekannt, bei dem sensorische Informationen einer Plausibilitätsprüfung unterzogen werden und ein Ort und ein Ortsvertrauensintervall mittels stochastischer Fusion, falls mindestens zwei plausible sensorische Informationen identifiziert werden, deren jeweilige Güteangabe im Wesentlichen durch stochastische Einflüsse bestimmt ist, oder andernfalls mittels deterministischer Fusion bestimmt werden.

Aus der europäischen Offenlegungsschrift EP 0 831 007 A1 ist ein Zugortungssystem mit einem satellitengestützten Ortungssystem bekannt, das zumindest zwei Satelliten aufweist. Das Zugortungssystem ermittelt die signaltechnisch sichere Korrektheit der von den Satelliten gesendeten Informationen, die für die Ortung verwendbar sind, durch einen Referenzempfänger, dessen Position mit signaltechnischer Sicherheit bekannt ist, und identifiziert Satelliten, deren Ortungsinformation unzulässig ist.

Bekannt sind ferner die Dokumente DE 10 2017 210131 A1, US 2006/058957 A1, US 2017/096778 A1, US 2016/0216124 A1, US 2010/0312461 A1 sowie DE 10 2018 207634 A1.

Der Erfindung liegt die Aufgabe zugrunde, ein Verfahren zum Betreiben eines Fahrzeugs anzugeben, bei dem ein Verlassen einer planmäßig zu befahrenden Strecke besonders einfach, aber dennoch sehr zuverlässig, erkannt werden kann.

Diese Aufgabe wird erfindungsgemäß durch ein Verfahren mit den Merkmalen gemäß Patentanspruch 1 gelöst. Vorteilhafte Ausgestaltungen des erfindungsgemäßen Verfahrens sind in Unteransprüchen angegeben.

Danach ist erfindungsgemäß vorgesehen, dass mit den den jeweiligen Ort des Fahrzeugs während der Fahrt angebenden Ortungsdaten und in dem Fahrzeug hinterlegten Streckendaten einer planmäßig zu befahrenden Strecke Abstandswerte berechnet werden, die den jeweiligen Abstand des Fahrzeugs von der planmäßig zu befahrenden Strecke während der Fahrt angeben, und ein Fehlersignal erzeugt wird, wenn die Abstandswerte auf ein Verlassen der planmäßig zu befahrenden Strecke hinweisen.

Ein wesentlicher Vorteil des erfindungsgemäßen Verfahrens ist darin zu sehen, dass durch die Beobachtung von Ortungsdaten während der Fahrt und der Berechnung von Abstandswerten, die den jeweiligen Abstand des Fahrzeugs von der planmäßig zu befahrenden Strecke während der Fahrt angeben, in besonders einfacher Weise erkannt werden kann, wenn das Fahrzeug mit einer gewissen Wahrscheinlichkeit die planmäßig zu befahrende Strecke verlassen hat. Das erfindungsgemäße Verfahren basiert auf der Idee, dass durch eine Beobachtung von Abstandswerten während der Fahrt, die sich auf unterschiedliche Orte beziehen und somit als solche nicht vergleichbar scheinen, dennoch zuverlässig Aussagen zu Streckenabweichungen möglich sind, beispielsweise durch Mittelung und statistische Auswertung und Bewertung des Verlaufs der sich auf unterschiedliche Orte beziehenden Abstandswerte.

Erfindungsgemäß werden die Abstandswerte oder eine vorgegebene Auswahl an Abstandswerten vorzeichenrichtig unter Bildung eines Mittelwerts gemittelt und eine die mittlere Abweichung vom Mittelwert angebende Abweichungsgröße errechnet und das Fehlersignal erzeugt, wenn der Mittelwert sowohl einen fest vorgegebenen ersten Grenzwert als auch einen von der Abweichungsgröße abhängigen zweiten Grenzwert erreicht oder überschreitet.

Die Abstandswerte werden vorzugsweise unter Bildung eines gleitenden Mittelwerts gemittelt, indem die Mittelung ausschließlich unter Heranziehung einer vorgegebenen Anzahl an zuletzt erfassten Ortungsdaten erfolgt und/oder ausschließlich unter Heranziehung von Ortungsdaten erfolgt, die innerhalb einer vorgegebenen Zeitspanne vor dem jeweiligen Zeitpunkt der Mittelung erfasst worden sind.

Alternativ oder zusätzlich kann in vorteilhafter Weise vorgesehen sein, dass die Abstandswerte in ein System künstlicher Intelligenz, das anhand von früheren Fahrten und/oder simulierten Fahrten angelernt worden ist, eingespeist werden und das Fehlersignal von dem System künstlicher Intelligenz erzeugt wird.

Das Fahrzeug ist vorzugsweise ein Schienenfahrzeug. Die Streckendaten sind vorzugsweise Eisenbahngleisanlagendaten.

Als Abweichungsgröße wird vorzugsweise die Standardabweichung errechnet. Bei einer solchen Vorgehensweise kann unter Annahme einer Gauß- oder Standardverteilung in vorteilhafter Weise eine statistische Auswertung erfolgen und dem Fehlersignal eine Wahrscheinlichkeitsangabe zugeordnet werden, die angibt, mit welcher Wahrscheinlichkeit das Fahrzeug die planmäßig zu befahrende Strecke verlassen hat oder nicht.

Der zweite Grenzwert wird vorzugsweise durch Multiplikation der Abweichungsgröße, insbesondere der genannten Standardabweichung, mit einer Konstanten gebildet.

Die Konstante liegt bevorzugt zwischen 1 und 5. Eine Konstante K=1 kann bei einer Gauß- oder Standardverteilung beispielsweise angeben, dass das Fahrzeug mit einer Wahrscheinlichkeit von 68 % die planmäßig zu befahrende Strecke verlassen hat, eine Konstante K=2 bezieht sich auf eine Wahrscheinlichkeitsangabe von 95 % und eine Konstante K=3 auf eine Wahrscheinlichkeitsangabe von 99 %.

Der erste Grenzwert liegt vorzugsweise zwischen 1,5 und 4 Meter und beträgt bevorzugt 2 Meter.

Die Abstandswerte und das Fehlersignal werden besonders bevorzugt unter Heranziehung von Fehlerangaben, die den möglichen Fehler der Ortungsdaten quantifizieren, ermittelt.

Im Rahmen der letztgenannten Variante wird es als vorteilhaft angesehen, wenn die Abstandswerte unter Heranziehung von Wichtungsfaktoren gemittelt werden und ein gewichteter Mittelwert gebildet wird und eine die mittlere Abweichung vom gewichteten Mittelwert angebende gewichtete Abweichungsgröße errechnet wird und das Fehlersignal erzeugt wird, wenn der gewichtete Mittelwert sowohl den fest vorgegebenen ersten Grenzwert als auch einen von der gewichteten Abweichungsgröße abhängigen zweiten Grenzwert erreicht oder überschreitet.

Die Wichtungsfaktoren werden bevorzugt unter Heranziehung von Fehlerangaben, die den möglichen Fehler der Ortungsdaten quantifizieren, ermittelt.

Bei einer als besonders vorteilhaft angesehenen Ausführungsvariante ist vorgesehen, dass ein Fahrerassistenzsystem in einem Normalbetriebsmodus auf der Basis von Informationen, die (vorzugsweise ortsabhängig) zu der zu befahrenden Strecke abgespeichert sind, Steuersignale und/oder Anzeigesignale für einen Fahrzeugführer erzeugt und das Fahrerassistenzsystem deaktiviert oder in einen Sonderbetriebsmodus geschaltet wird, wenn das Fehlersignal vorliegt.

Alternativ oder zusätzlich kann in vorteilhafter Weise vorgesehen sein, dass ein Fahrgastinformationssystem in einem Normalbetriebsmodus auf der Basis von Informationen, die (vorzugsweise ortsabhängig) zu der zu befahrenden Strecke abgespeichert sind, Anzeigesignale für Fahrgäste erzeugt und das Fahrgastinformationssystem deaktiviert oder in einen Sonderbetriebsmodus geschaltet wird, wenn das Fehlersignal vorliegt.

Zur Bildung der Abstandswerte werden vorzugsweise satellitenbasierte Ortungsdaten oder zumindest auch satellitenbasierte Ortungsdaten herangezogen.

Unplausible Abstandswerte werden bei der Bildung des Fehlersignals vorzugsweise ignoriert.

Die Erfindung bezieht sich darüber hinaus auf ein Fahrzeug.

Erfindungsgemäß ist vorgesehen, dass das Fahrzeug eine Fahrtkontrolleinrichtung aufweist, die dazu ausgebildet ist, mit den den jeweiligen Ort des Fahrzeugs während der Fahrt angebenden Ortungsdaten und Streckendaten einer zu befahrenden Strecke Abstandswerte zu berechnen, die den jeweiligen Abstand des Fahrzeugs von der zu befahrenden Strecke während der Fahrt angeben, und ein Fehlersignal zu erzeugen, wenn die Abstandswerte auf ein Verlassen der Strecke hinweisen, wobei die Abstandswerte oder eine vorgegebene Anzahl und/oder Auswahl an Abstandswerten vorzeichenrichtig unter Bildung eines Mittelwerts gemittelt werden und eine die mittlere Abweichung vom Mittelwert angebende Abweichungsgröße errechnet wird, und wobei das Fehlersignal erzeugt wird, wenn der Mittelwert sowohl einen fest vorgegebenen ersten Grenzwert als auch einen von der Abweichungsgröße abhängigen zweiten Grenzwert erreicht oder überschreitet.

Bezüglich der Vorteile des erfindungsgemäßen Fahrzeugs sowie bezüglich vorteilhafter Ausgestaltungen des erfindungsgemäßen Fahrzeugs sei auf die obigen Ausführungen im Zusammenhang mit dem erfindungsgemäßen Verfahren und dessen vorteilhafter Ausgestaltungen verwiesen.

Das Fahrzeug weist vorzugsweise ein Fahrerassistenzsystem auf, das in einem Normalbetriebsmodus auf der Basis von Informationen, die zu der zu befahrenden Strecke abgespeichert sind, Steuersignale und/oder Anzeigesignale für einen Fahrzeugführer erzeugt und deaktiviert oder in einen Sonderbetriebsmodus geschaltet wird, wenn das Fehlersignal vorliegt.

Alternativ oder zusätzlich weist das Fahrzeug vorzugsweise ein Fahrgastinformationssystem auf, das in einem Normalbetriebsmodus auf der Basis von Informationen, die zu der zu befahrenden Strecke abgespeichert sind, Anzeigesignale für Fahrgäste erzeugt und deaktiviert oder in einen Sonderbetriebsmodus geschaltet wird, wenn das Fehlersignal vorliegt.

Die Erfindung wird nachfolgend anhand von Ausführungsbeispielen näher erläutert, dabei zeigen beispielhaft

Figur 1      in einer schematischen Darstellung ein Ausführungsbeispiel für ein erfindungsgemäßes Schienenfahrzeug, das mit einer Fahrtkontrolleinrichtung ausgestattet ist,

Figuren 2-5      Ausführungsbeispiele für die Arbeitsweise der Fahrtkontrolleinrichtung gemäß Figur 1 im Zusammenhang mit Verfahren zur Überprüfung, ob sich das Schienenfahrzeug gemäß Figur 1 mit einer vorgegebenen Wahrscheinlichkeit auf einer planmäßig zu befahrenden Strecke befindet oder nicht,

Figur 6      ein Ausführungsbeispiel für ein erfindungsgemäßes Schienenfahrzeug, bei dem ein Fahrerassistenzsystem mit einer Fahrtkontrolleinrichtung in Verbindung steht,

Figur 7      ein Ausführungsbeispiel für ein erfindungsgemäßes Schienenfahrzeug, bei dem ein Fahrgastinformationssystem mit einer Fahrtkontrolleinrichtung in Verbindung steht,

Figur 8      ein Ausführungsbeispiel für ein erfindungsgemäßes Schienenfahrzeug, bei dem ein Fahreras- sistenzsystem und ein Fahrgastinformationssystem mit einer Fahrtkontrolleinrichtung in Verbindung stehen, und

Figur 9 ein Ausführungsbeispiel für ein erfindungsgemäßes Schienenfahrzeug, bei dem ein Fahrerassistenzsystem und ein Fahrgastinformationssystem mit einer auf künstlicher Intelligenz basierenden Fahrtkontrolleinrichtung in Verbindung stehen.

In den Figuren werden für identische oder vergleichbare Komponenten stets dieselben Bezugszeichen verwendet.

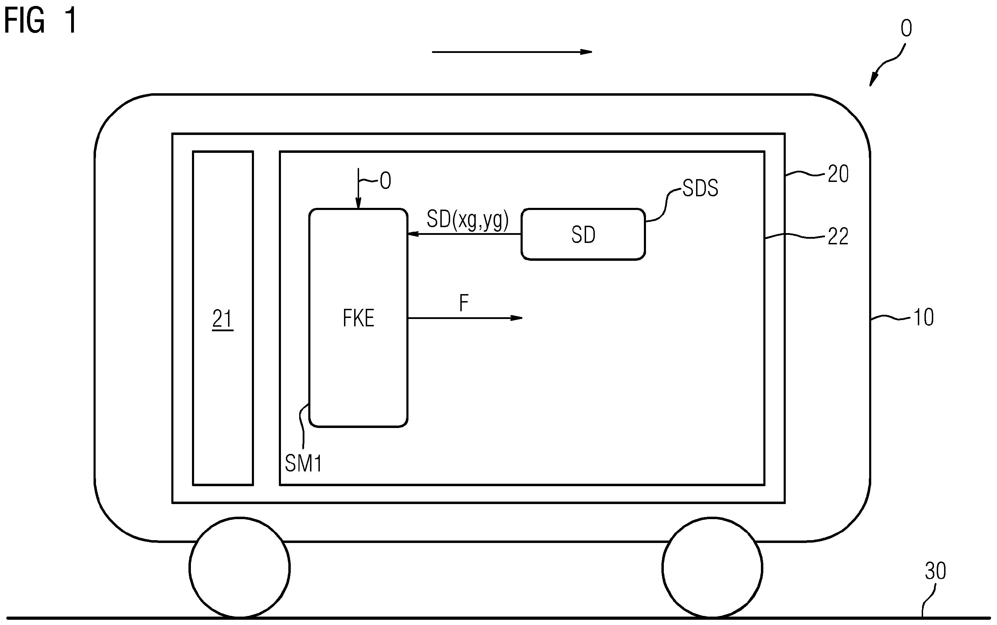

Die Figur 1 zeigt ein Ausführungsbeispiel für ein erfindungsgemäßes Schienenfahrzeug 10 in einer schematischen Sicht von der Seite während einer Fahrt auf einer planmäßig zu befahrenden Strecke 30. Das Schienenfahrzeug 10 weist eine Steuereinrichtung 20 auf, die eine Recheneinrichtung 21 und einen Speicher 22 umfasst.

In dem Speicher 22 ist ein Softwaremodul SM1 abgespeichert, das bei Ausführung durch die Recheneinrichtung 21 eine Fahrtkontrolleinrichtung FKE bildet. Die Fahrtkontrolleinrichtung FKE steht mit einem im Speicher 22 abgespeicherten Streckendatensatz SDS in Verbindung, in dem Streckendaten SD einer oder mehrerer planmäßig zu befahrender Strecken 30 abgespeichert sind. Die Fahrtkontrolleinrichtung FKE wertet die in dem Streckendatensatz SDS abgespeicherten Streckendaten SD sowie Ortungsdaten O aus, die den jeweiligen Ort des Schienenfahrzeugs 10 während der Fahrt angeben.

Wie weiter unten noch näher im Detail erläutert werden wird, bildet die Fahrtkontrolleinrichtung FKE auf der Basis der Ortungsdaten O und der Streckendaten SD Abstandswerte und wertet diese aus. Ausgangsseitig erzeugt die Fahrtkontrolleinrichtung FKE ein Fehlersignal F, wenn die Abstandswerte auf ein Verlassen der planmäßig zu befahrenden Strecke 30 hinweisen.

Die Ortungsdaten O basieren vorzugsweise auf Satellitensignalen eines oder mehrerer Satelliten oder eines oder mehrerer satellitenbasierter Ortungssysteme.

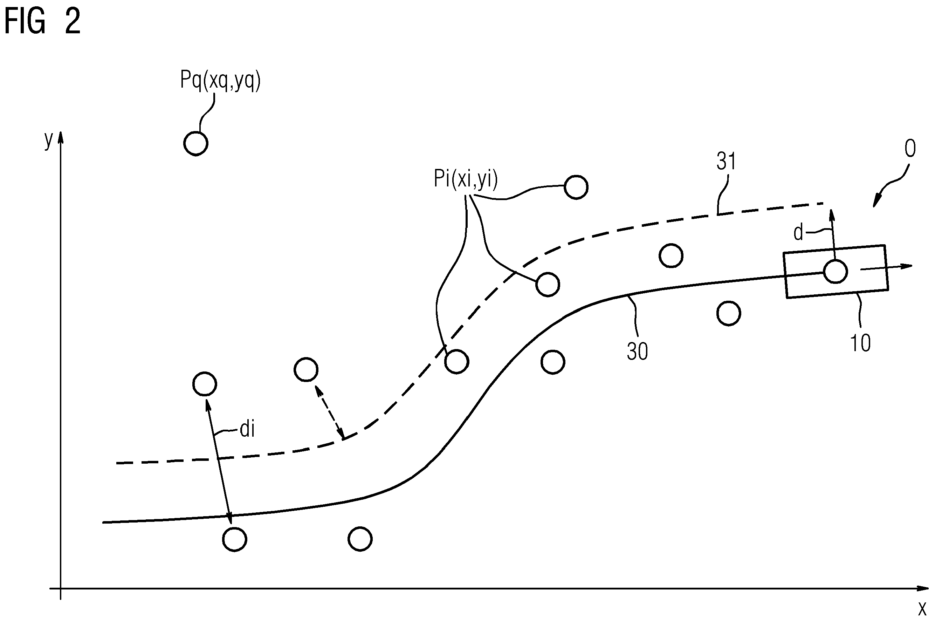

Die Figur 2 zeigt in einer schematischen Darstellung die Fahrt des Schienenfahrzeugs 10 gemäß Figur 1 bei einer Fahrt auf der planmäßig zu befahrenden Strecke 30, die in der Figur 2 über kartesische Ortungskoordinaten x und y aufgetragen ist. Basieren die Ortungsdaten O auf Kugelkoordinaten, die sich auf Längengrade und Breitengrade beziehen, so können diese in bekannter Weise - unter Annahme einer Fahrt in der Ebene und Vernachlässigung der Erdwölbung und etwaigen Gefällen auf der Strecke - in die in der Figur 2 gezeigten kartesische Ortungskoordinaten x und y umgerechnet werden. Alternativ kann eine Berechnung direkt auf der Basis der Kugelkoordinaten erfolgen.

In der Figur 2 sind durch Punkte Positionen Pi markiert, die während der Fahrt des Schienenfahrzeugs 10 auf der planmäßig zu befahrenden Strecke 30 ermittelt und durch die Ortungsdaten O beschrieben worden sind.

Benachbart zu der planmäßig zu befahrenden Strecke 30, bei der es sich beispielsweise um ein Eisenbahngleis handelt, befindet sich bei dem Ausführungsbeispiel gemäß Figur 2 ein zweites Eisenbahngleis 31, das von dem Schienenfahrzeug 10 nicht befahren werden soll, aber unter Umständen - beispielsweise wegen einer falsch gestellten Weiche - womöglich tatsächlich befahren wird.

Um festzustellen, ob sich das Schienenfahrzeug 10 tatsächlich auf der planmäßig zu befahrenden Strecke 30 und nicht auf dem benachbarten Eisenbahngleis 31 befindet, wertet die Fahrtkontrolleinrichtung FKE gemäß Figur 1 die Ortungsdaten O aus, wobei sie mit den Ortungsdaten O und den Streckendaten SD der planmäßig zu befahrenden Strecke 30 Abstandswerte di berechnet, die den jeweiligen Abstand des Schienenfahrzeugs 10 von der planmäßig zu befahrenden Strecke 30 während der Fahrt angeben.

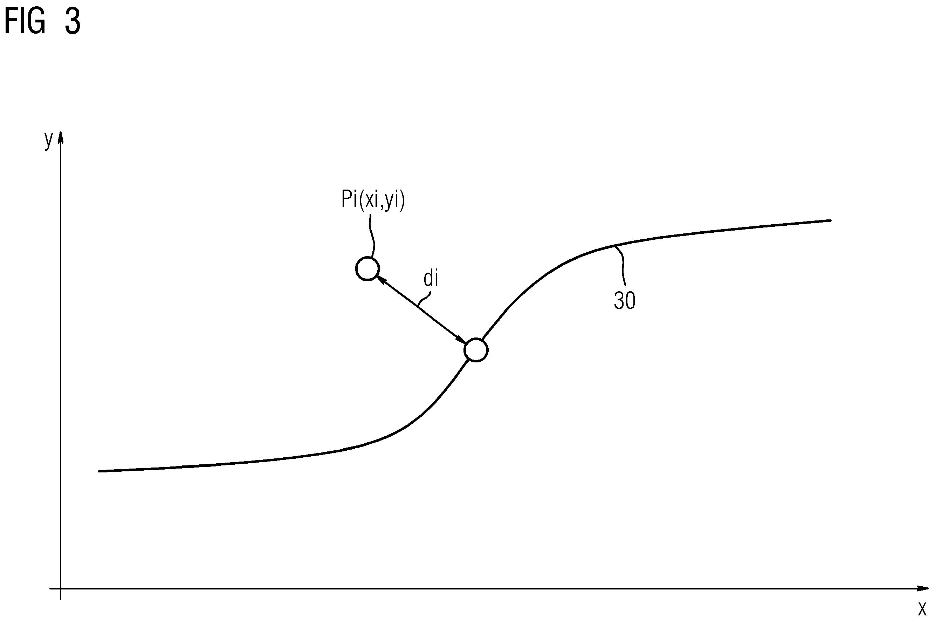

Die Berechnung der Abstandswerte di erfolgt dabei jeweils derart, dass stets der kleinste mögliche Abstandswert gebildet wird, wie dies schematisch beispielhaft in der Figur 3 dargestellt ist.

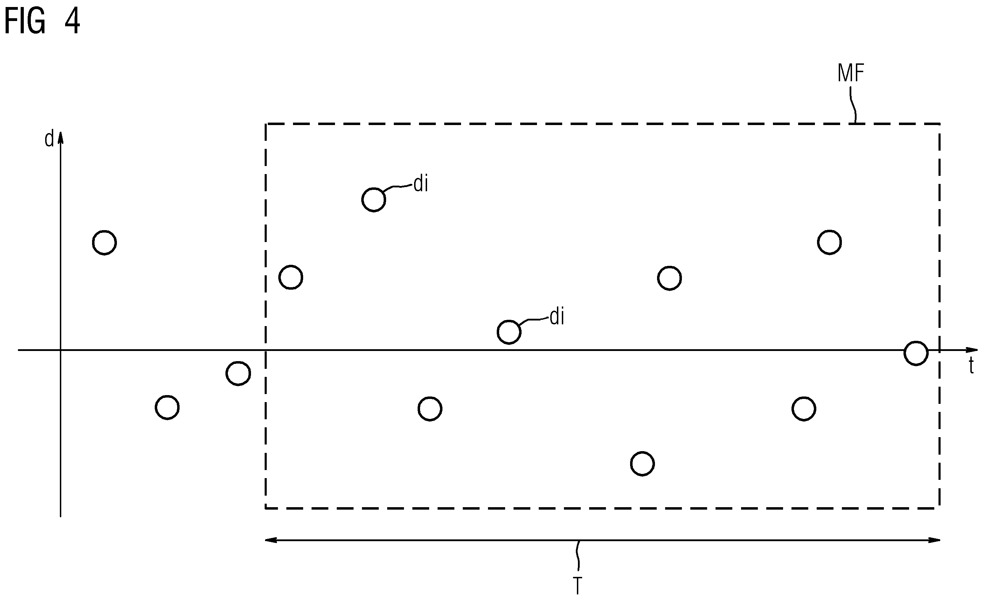

Im zeitlichen Verlauf über der Zeit t ergibt sich somit eine Folge an Abstandswerten di, die in der Figur 4 über der Zeit t dargestellt sind.

Die Abstandswerte di werden vorzugsweise unter Bildung eines gleitenden Mittelwerts D gemittelt, indem unter Heranziehung eines vorgegebenen Messfensters MF eine Mittelung durchgeführt wird. Das Messfenster MF bezieht sich vorzugsweise auf eine vorgegebene Anzahl N an zuletzt bzw. vor dem jeweiligen Zeitpunkt der Mittelung erfassten Ortungsdaten O oder ausschließlich auf Ortungsdaten O, die innerhalb einer vorgegebenen Zeitspanne T vor dem jeweiligen Zeitpunkt der Mittelung erfasst worden sind.

Mit anderen Worten ist es vorteilhaft, wenn nicht alle Abstandswerte, die während der gesamten vorherigen Fahrt des Schienenfahrzeugs 10 erfasst worden sind, zur Mittelung herangezogen werden, sondern lediglich eine vorgegebene Auswahl N an Abstandswerten di, die sich auf zuletzt erfasste Ortungsdaten beziehen.

Den Mittelwert D errechnet die Fahrtkontrolleinrichtung FKE gemäß Figur 1 vorzugsweise wie folgt:

$$D = \frac{1}{N} \sum_{i}^{N} di$$

wobei di den i-ten Abstand zur planmäßig zu befahrenden Strecke 30 angibt. Die Abstandswerte di sind vorzeichenbehaftet, so dass das jeweilige Vorzeichen angibt, ob die zu dem jeweiligen Abstand di gehörige Position Pi des Schienenfahrzeugs rechts oder links von der Strecke 30 liegt.

Zusätzlich zu dem Mittelwert D errechnet die Fahrtkontrolleinrichtung FKE gemäß Figur 1 eine die mittlere Abweichung vom Mittelwert D angegebene Abweichungsgröße A wie folgt:

$$A = \sqrt{\frac{1}{N} \sum_{i}^{N} (di - D)^2}$$

Geht man davon aus, dass die Verteilung der Abstandswerte di gaußförmig ist bzw. eine Standardverteilung ist, so kann die Abweichungsgröße A als Standardabweichung $\sigma d$ der Abweichungswerte di aufgefasst bzw. bezeichnet werden.

Das Fehlersignal F gemäß Figur 1 wird die Fahrtkontrolleinrichtung FKE vorzugsweise dann erzeugen, wenn der Mittelwert sowohl einen fest vorgegebenen ersten Grenzwert G1 als auch einen von der Abweichungsgröße A abhängigen zweiten Grenzwert G2 erreicht oder überschreitet:

$$D \geq G1 \text{ und } D \geq G2 \Rightarrow \text{Erzeugung des Fehlersignals F}$$

Mit Blick darauf, dass in Deutschland und in Europa der Mindestabstand (Mitte-Mitte) zwischen parallel verlaufenden Eisenbahngleisen vier Meter beträgt, wird es als vorteilhaft angesehen, wenn der erste Grenzwert G1 im Bereich von 2 m und 4 m liegt und vorzugsweise 2 m beträgt.

Der zweite Grenzwert G2 wird vorzugsweise durch Multiplikation der Abweichungsgröße A mit einer Konstanten K gebildet gemäß:

$$G2 = A \cdot K$$

Die Konstante K liegt vorzugsweise zwischen 1 und 5. Die Konstante K bestimmt die Wahrscheinlichkeit, mit der das Fehlersignal F hinsichtlich des Verlassens der planmäßig zu befahrenden Strecke 30 erzeugt werden soll.

Geht man - wie erläutert - davon aus, dass die Verteilung der Abstandswerte gaußförmig ist bzw. eine Standardverteilung ist, so führt eine Konstante K = 1 dazu, dass das Fehlersignal F erzeugt wird, wenn das Schienenfahrzeug 10 die planmäßig zu befahrende Strecke 30 mit einer Wahrscheinlichkeit von 68 % verlassen hat.

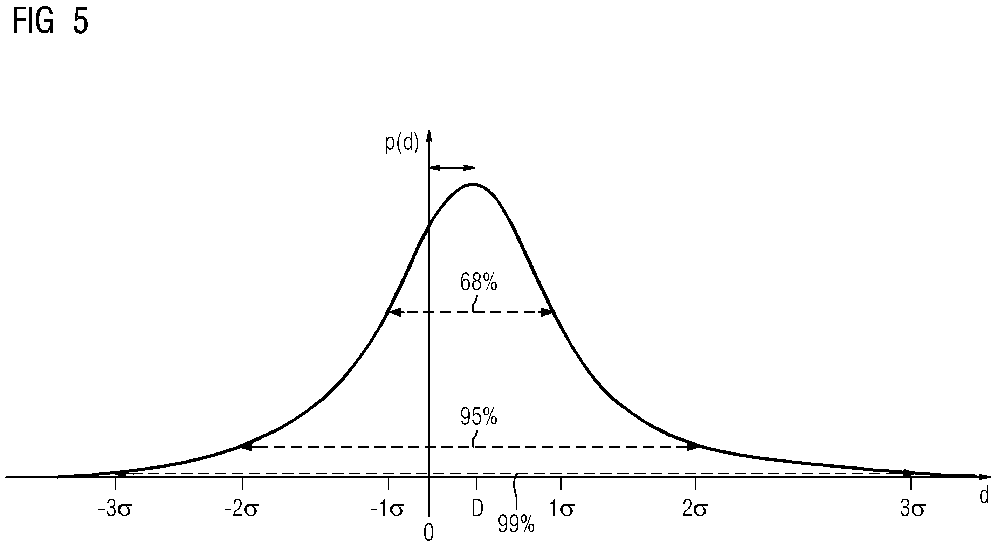

Größere Werte für die Konstante K, beispielsweise 2 oder 3, führen dazu, dass das Fehlersignal F erzeugt wird, wenn das Schienenfahrzeug 10 die planmäßig zu befahrende Strecke 30 mit einer Wahrscheinlichkeit von 95 % (K=2) oder 99 % (K=3) verlassen hat, wie beispielhaft in der Figur 5 dargestellt ist. In der Figur 5 ist die Wahrscheinlichkeitsdichte $\rho$ über den Abständen d aufgetragen; $\sigma$ kennzeichnet die Standardabweichung.

Alternativ ist es möglich, den Mittelwert D und die Abweichungsgröße A gewichtet zu ermitteln, beispielsweise dann, wenn für die mit den Ortungsdaten O übermittelten Positionen Pi(xi,yi) Fehlerwerte vorliegen. In diesem Falle können Positionen Pi mit hohem Fehlerwert mit einem geringeren Gewicht berücksichtigt werden als Positionen Pi mit geringem Fehlerwert.

Dies soll nachfolgend für den Fall erläutert werden, dass für jede mit den Ortungsdaten O übermittelte Position Pi(xi,yi) jeweils Fehlerwerte in Form von Standardabweichungswerten $\sigma xi$ für die X-Koordinate und $\sigma yi$ für die y-Koordinate seitens des Senders der Ortungsdaten O übermittelt und/oder vom Empfänger ermittelt werden. In diesem Falle wird die Berechnung eines gewichteten Mittelwerts D' und einer gewichteten Abweichungsgröße A' vorzugsweise wie folgt vorgenommen:

Zunächst wird für jeden Abstand di jeweils eine Standardabweichung $\sigma di$ errechnet gemäß:

$$\sigma di = \left| \frac{xi - xg}{\sqrt{(xi - xg)^2 + (yi - yg)^2}} \sigma xi \right| + \left| \frac{yi - yg}{\sqrt{(xi - xg)^2 + (yi - yg)^2}} \sigma yi \right|$$

wobei xg und yg die tatsächlichen Positionen des Gleises gemäß den Streckendaten SD gemäß Figur 1 bezeichnen. $\sigma di$ beschreibt somit die Standardabweichung des Abstands di, der für die jeweilige Position P(xi, yi) errechnet worden ist.

Den gewichteten Mittelwert D' errechnet die Fahrtkontrolleinrichtung FKE gemäß Figur 1 vorzugsweise wie folgt:

$$D' = \frac{1}{V} \sum_{i}^{N} wi \cdot di$$

mit

$$wi = \frac{1}{\sigma di}$$

und

$$V = \sum_{i}^{N} wi$$

wobei wi fehlerabhängige Wichtungsfaktoren und V einen Normierungsfaktor bezeichnen.

Die die mittlere Abweichung vom gewichteten Mittelwert D' angegebende, gewichtete Abweichungsgröße A' wird vorzugsweise wie folgt errechnet:

$$A' = \sqrt{\frac{1}{V} \sum_{i}^{N} wi \cdot (di - D')^2}$$

Die gewichtete Abweichungsgröße A' stellt bei der obigen Berechnungsvariante wieder eine Standardabweichung dar.

Alternativ können die fehlerabhängigen Wichtungsfaktoren wi auch wie folgt berechnet werden:

$$wi = \frac{1}{\sigma di^2}$$

Bei der letztgenannten Variante werden Positionswerte mit hohen Fehlern deutlich geringer (verglichen mit der ersten Wichtungsvariante) gewichtet als Positionswerte mit geringen Fehlern.

Aus den Ortungsdaten O ermittelte unplausible Positionen, wie beispielsweise die Position Pq(xq,yq) in Figur 2 werden vorzugsweise weder bei der Berechnung des Mittwelwerts D bzw. D' noch der Berechnung der Abweichungsgröße A bzw. A' berücksichtigt.

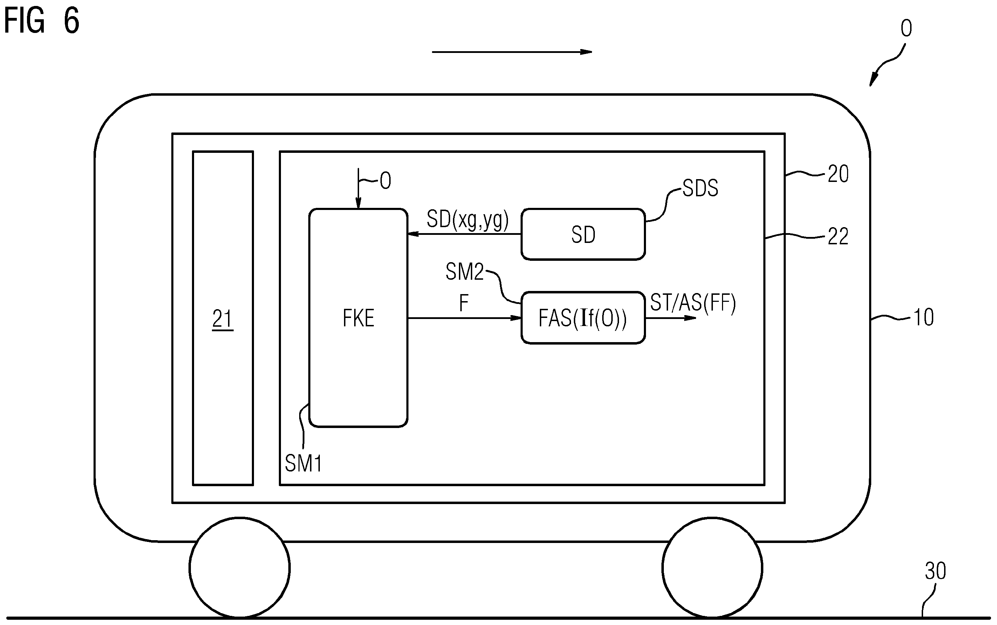

Die Figur 6 zeigt ein Ausführungsbeispiel für ein Schienenfahrzeug 10, bei dem in dem Speicher 22 der Steuereinrichtung 20 zusätzlich ein Softwaremodul SM2 abgespeichert ist. Das Softwaremodul SM2 bildet bei Ausführung durch die Recheneinrichtung 21 ein Fahrerassistenzsystem FAS, das im Normalbetriebsmodus auf der Basis von fahrzeugführerbezogenen Informationen If, die zu der zu befahrenden Strecke 30 abgespeichert sind, ortsabhängig bzw. von den Ortungsdaten O abhängig Steuersignale ST und/oder Anzeigesignale AS(FF) für den Fahrzeugführer erzeugt.

Wird von der Fahrtkontrolleinrichtung FKE das Fehlersignal F erzeugt, das angibt, dass das Schienenfahrzeug 10 womöglich oder mit überwiegender Wahrscheinlichkeit die planmäßig zu befahrende Strecke 30 verlassen hat, so wird das Fahrerassistenzsystem FAS vorzugsweise deaktiviert oder in einen Sonderbetriebsmodus geschaltet, bei dem der Fahrzeugführer über die bestehende Situation informiert wird.

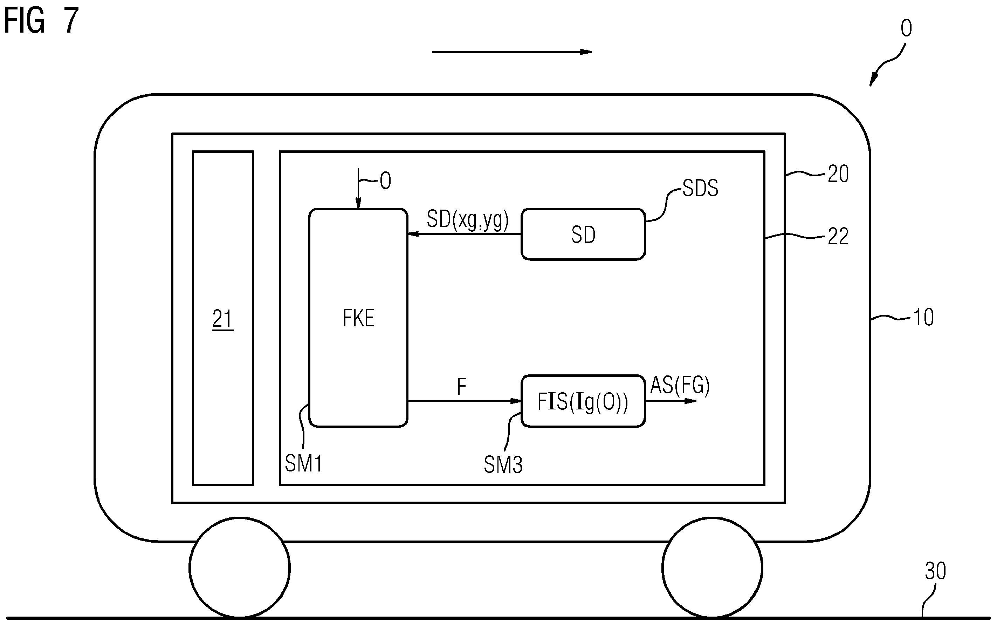

Die Figur 7 zeigt ein Ausführungsbeispiel für ein Schienenfahrzeug 10, bei dem in dem Speicher 22 der Steuereinrichtung 20 zusätzlich ein Softwaremodul SM3 abgespeichert ist. Das Softwaremodul SM3 bildet bei Ausführung durch die Recheneinrichtung 21 ein Fahrgastinformationssystem FIS, das im Normalbetriebsmodus auf der Basis von fahrgastbezogenen Informationen Ig, die zu der zu befahrenden Strecke 30 abgespeichert sind, ortsabhängig Anzeigesignale AS(FG) für die Fahrgäste erzeugt.

Wird von der Fahrtkontrolleinrichtung FKE das Fehlersignal F erzeugt, das angibt, dass das Schienenfahrzeug 10 womöglich oder mit überwiegender Wahrscheinlichkeit eine planmäßig zu befahrende Strecke verlassen hat, so wird das Fahrgastinformationssystem FIS vorzugsweise deaktiviert oder in einen Sonderbetriebsmodus geschaltet, bei dem die Fahrgäste über andere Sachverhalte informiert werden.

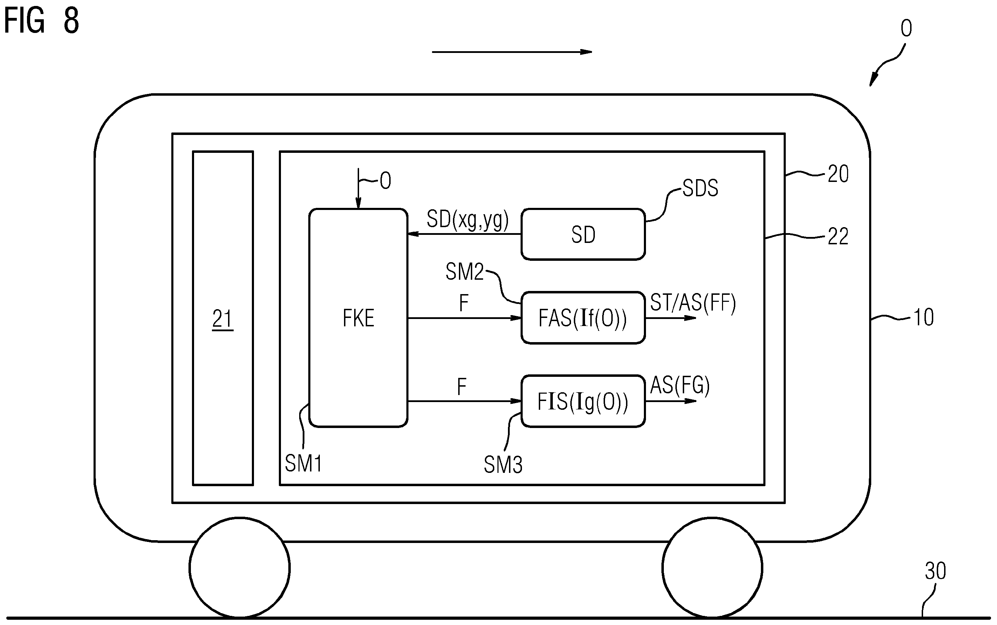

Die Figur 8 zeigt ein Ausführungsbeispiel für ein Schienenfahrzeug 10, bei dem in dem Speicher 22 der Steuereinrichtung 20 sowohl ein Softwaremodul SM2, das bei Ausführung durch die Recheneinrichtung 21 ein Fahrerassistenzsystem FAS bildet, als auch ein Softwaremodul SM3, das bei Ausführung durch die Recheneinrichtung 21 ein Fahrgastinformationssystem FIS bildet, abgespeichert sind. Bezüglich des Fahrerassistenzsystems FAS und des Fahrgastinformationssystems FIS gelten die obigen Ausführungen im Zusammenhang mit den Figuren 6 und 7 entsprechend.

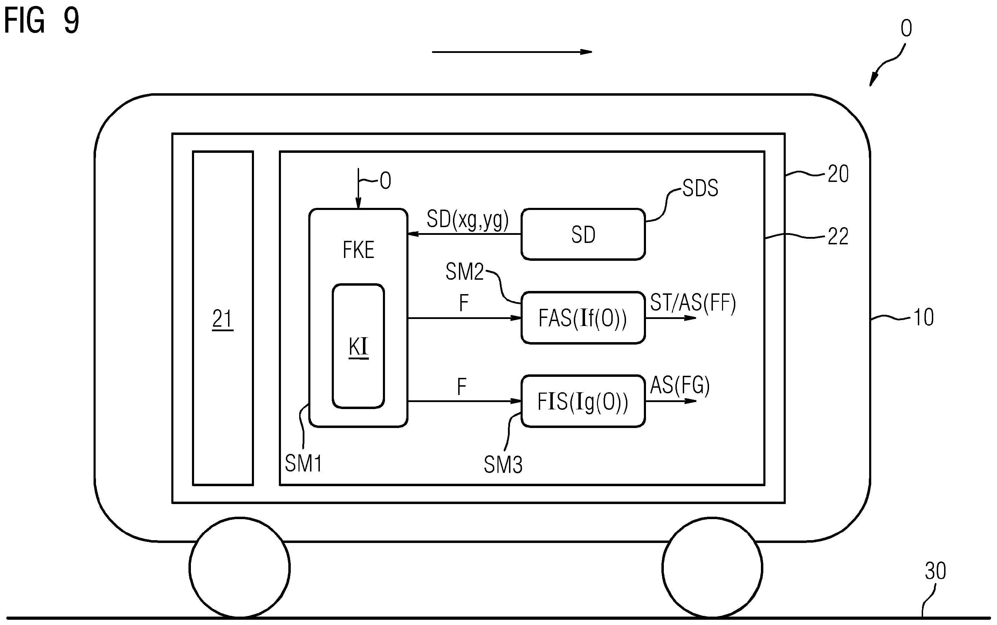

Die Figur 9 zeigt ein Ausführungsbeispiel für ein erfindungsgemäßes Schienenfahrzeug 10, bei dem in einem Softwaremodul SM1, das bei Ausführung durch die Recheneinrichtung 21 eine Fahrtkontrolleinrichtung FKE bildet, ein System künstlicher Intelligenz KI integriert ist. Das System künstlicher Intelligenz KI ist anhand von früheren Fahrten und/oder simulierten Fahrten angelernt worden. Die Abstandswerte di bzw. die Ortungsdaten O werden in das System künstlicher Intelligenz KI eingespeist und von diesem ausgewertet. Das Fehlersignal F wird somit auf der Basis angelernter künstlicher Intelligenz erzeugt. Bezüglich des Fahrerassistenzsystems FAS und des Fahrgastinformationssystems FIS gelten die obigen Ausführungen im Zusammenhang mit den Figuren 6 und 7 entsprechend. Liegen in den Streckendaten SD neben den Daten zu der planmäßig zu befahrenden Strecke 30 auch noch Daten zu dem restlichen Streckennetz vor, so kann bei den obigen Ausführungsbeispielen jeweils durch "Map-Matching" ein wahrscheinlicher Ort des Schienenfahrzeugs 10 gefunden werden, wenn dieses sich mit überwiegender Wahrscheinlichkeit nicht mehr auf der planmäßig zu befahrenden Strecke 30 befindet, sondern beispielsweise auf dem benachbarten Eisenbahngleis 31. Dabei kann die Historie der Zugfahrt miteinbezogen werden, beispielsweise unter Berücksichtigung, dass das Schienenfahrzeug 10 nicht plötzlich das Gleis wechseln kann, sondern eine Weiche benötigt.

Obwohl die Erfindung im Detail durch bevorzugte Ausführungsbeispiele näher illustriert und beschrieben wurde, so ist die Erfindung nicht durch die offenbarten Beispiele eingeschränkt und andere Variationen können vom Fachmann hieraus abgeleitet werden, sofern diese innerhalb des Umfangs der Ansprüche liegen.

Bezugszeichenliste

| | |
|---|---|
| 10 | Schienenfahrzeug |
| 20 | Steuereinrichtung |
| 21 | Recheneinrichtung |
| 22 | Speicher |
| 30 | Strecke |
| 31 | Eisenbahngleis |
| | |
| A | Abweichungsgröße |
| A' | gewichtete Abweichungsgröße |
| AS(FF) | Anzeigesignale für den Fahrzeugführer |
| AS(FG) | Anzeigesignale für Fahrgäste |
| d | Abstand |
| D | Mittelwert |
| D' | gewichteter Mittelwert |
| di | Abstandswerte |
| F | Fehlersignal |
| FAS | Fahrerassistenzsystem |
| FIS | Fahrgastinformationssystem |
| FKE | Fahrtkontrolleinrichtung |
| G1 | Grenzwert |
| G2 | Grenzwert |
| If | fahrzeugführerbezogene Informationen |
| Ig | fahrgastbezogene Informationen |
| K | Konstante |
| KI | System künstlicher Intelligenz |
| MF | Messfenster |
| N | Anzahl |
| O | Ortungsdaten |
| Pi | Positionen |
| Pq | Positionen |
| SD | Streckendaten |
| SDS | Streckendatensatz |
| SM1 | Softwaremodul |
| SM2 | Softwaremodul |
| SM3 | Softwaremodul |

| ST | Steuersignale |
|---|---|
| t | Zeit |
| T | Zeitspanne |
| wi | Wichtungsfaktoren |
| x | Ortungskoordinaten |
| xg | tatsächliche Position des Gleises |
| yg | tatsächliche Position des Gleises |
| y | Ortungskoordinaten |
| $\sigma$ | Standardabweichung |
| $\sigma$d | Standardabweichung |
| $\sigma$di | Standardabweichung |
| $\sigma$xi | Standardabweichungswerte für die x-Koordinate / Fehlerangabe |
| $\sigma$yi | Standardabweichungswerte für die y-Koordinate / Fehlerangabe |
| $\rho$ | Wahrscheinlichkeitsdichte |

**Patentansprüche**

1. Verfahren zum Betreiben eines Fahrzeugs, wobei

   - mit den den jeweiligen Ort des Fahrzeugs während der Fahrt angebenden Ortungsdaten (O) und in dem Fahrzeug hinterlegten Streckendaten (SD) einer planmäßig zu befahrenden Strecke (30) Abstandswerte (di) berechnet werden, die den jeweiligen Abstand des Fahrzeugs von der planmäßig zu befahrenden Strecke (30) während der Fahrt angeben, und
   - ein Fehlersignal (F) erzeugt wird, wenn die Abstandswerte (di) auf ein Verlassen der planmäßig zu befahrenden Strecke (30) hinweisen,
   - wobei die Abstandswerte (di) oder eine vorgegebene Anzahl (N) und/oder Auswahl an Abstandswerten (di) vorzeichenrichtig unter Bildung eines Mittelwerts (D, D') gemittelt werden und **dadurch gekennzeichnet, dass** eine die mittlere Abweichung vom Mittelwert (D, D') angebende Abweichungsgröße (A, A') errechnet wird, und
   - wobei das Fehlersignal (F) erzeugt wird, wenn der Mittelwert (D, D') sowohl einen fest vorgegebenen ersten Grenzwert (G1) als auch einen von der Abweichungsgröße (A, A') abhängigen zweiten Grenzwert (G2) erreicht oder überschreitet.

2. Verfahren nach Anspruch 1,
   **dadurch gekennzeichnet, dass**
   die Abstandswerte (di) unter Bildung eines gleitenden Mittelwerts (D, D') gemittelt werden, indem die Mittelung ausschließlich unter Heranziehung einer vorgegebenen Anzahl (N) an zuletzt erfassten Ortungsdaten (O) erfolgt und/oder ausschließlich unter Heranziehung von Ortungsdaten (O) erfolgt, die innerhalb einer vorgegebenen Zeitspanne (T) vor dem jeweiligen Zeitpunkt der Mittelung erfasst worden sind.

3. Verfahren nach einem der voranstehenden Ansprüche,
   **dadurch gekennzeichnet, dass**

   - die Abstandswerte (di) in ein System künstlicher Intelligenz (KI), das anhand von früheren Fahrten und/oder simulierten Fahrten angelernt worden ist, eingespeist werden und
   - das Fehlersignal (F) von dem System künstlicher Intelligenz (KI) erzeugt wird.

4. Verfahren nach einem der voranstehenden Ansprüche,
   **dadurch gekennzeichnet, dass**

   - das Fahrzeug ein Schienenfahrzeug (10) ist und
   - die Streckendaten (SD) Eisenbahngleisanlagendaten sind.

5. Verfahren nach Anspruch 1,
   **dadurch gekennzeichnet, dass**
   als Abweichungsgröße (A, A') die Standardabweichung ($\sigma$) errechnet wird.

6. Verfahren nach Anspruch 1 oder 5,

**dadurch gekennzeichnet, dass**
der zweite Grenzwert (G2) durch Multiplikation der Abweichungsgröße (A, A') mit einer Konstanten (K) gebildet wird.

7. Verfahren nach Anspruch 6,
**dadurch gekennzeichnet, dass**

- die Konstante (K) zwischen 1 und 5 liegt und/oder
- der erste Grenzwert (G1) zwischen 1,5 und 4 Meter, vorzugsweise 2 Meter, beträgt.

8. Verfahren nach einem der voranstehenden Ansprüche,
**dadurch gekennzeichnet, dass**
die Abstandswerte (di) und das Fehlersignal (F) unter Heranziehung von Fehlerangaben ($\sigma$xi, $\sigma$yi), die den möglichen Fehler der Ortungsdaten (O) quantifizieren, ermittelt werden.

9. Verfahren nach einem der voranstehenden Ansprüche,
**dadurch gekennzeichnet, dass**

- die Abstandswerte (di) unter Heranziehung von Wichtungsfaktoren (wi) gemittelt werden und ein gewichteter Mittelwert (D') gebildet wird und
- eine die mittlere Abweichung vom gewichteten Mittelwert (D') angebende gewichtete Abweichungsgröße (A') errechnet wird und
- das Fehlersignal (F) erzeugt wird, wenn der gewichtete Mittelwert (D') sowohl den fest vorgegebenen ersten Grenzwert (G1) als auch einen von der gewichteten Abweichungsgröße (A') abhängigen zweiten Grenzwert (G2) erreicht oder überschreitet.

10. Verfahren nach Anspruch 9,
**dadurch gekennzeichnet, dass**
die Wichtungsfaktoren (wi) unter Heranziehung von Fehlerangaben ($\sigma$xi, $\sigma$yi), die den möglichen Fehler der Ortungsdaten (O) quantifizieren, ermittelt werden.

11. Verfahren nach einem der voranstehenden Ansprüche,
**dadurch gekennzeichnet, dass**

- ein Fahrerassistenzsystem (FAS) in einem Normalbetriebsmodus auf der Basis von Informationen (If), die zu der zu befahrenden Strecke (30) abgespeichert sind, Steuersignale (ST) und/oder Anzeigesignale (AS(FF)) für einen Fahrzeugführer erzeugt und
- das Fahrerassistenzsystem (FAS) deaktiviert oder in einen Sonderbetriebsmodus geschaltet wird, wenn das Fehlersignal (F) vorliegt.

12. Verfahren nach einem der voranstehenden Ansprüche,
**dadurch gekennzeichnet, dass**

- ein Fahrgastinformationssystem (FIS) in einem Normalbetriebsmodus auf der Basis von Informationen (Ig), die zu der zu befahrenden Strecke (30) abgespeichert sind, Anzeigesignale (AS(FG)) für Fahrgäste erzeugt und
- das Fahrgastinformationssystem (FIS) deaktiviert oder in einen Sonderbetriebsmodus geschaltet wird, wenn das Fehlersignal (F) vorliegt.

13. Verfahren nach einem der voranstehenden Ansprüche,
**dadurch gekennzeichnet, dass**
zur Bildung der Abstandswerte (di) satellitenbasierte Ortungsdaten (O) herangezogen werden.

14. Verfahren nach einem der voranstehenden Ansprüche,
**dadurch gekennzeichnet, dass** unplausible Abstandswerte und/oder unplausible gemessene Positionen (Pq(xq,yq)) bei der Bildung des Fehlersignals (F) ignoriert werden.

15. Fahrzeug mit einer Steuereinrichtung, wobei das Fahrzeug eine Fahrtkontrolleinrichtung (FKE) aufweist, die dazu ausgebildet ist,

- mit den den jeweiligen Ort des Fahrzeugs während der Fahrt angebenden Ortungsdaten (O) und Streckendaten (SD) einer zu befahrenden Strecke (30) Abstandswerte (di) zu berechnen, die den jeweiligen Abstand des Fahrzeugs von der zu befahrenden Strecke (30) während der Fahrt angeben, und
- ein Fehlersignal (F) zu erzeugen, wenn die Abstandswerte (di) auf ein Verlassen der Strecke (30) hinweisen,
- wobei die Abstandswerte (di) oder eine vorgegebene Anzahl (N) und/oder Auswahl an Abstandswerten (di) vorzeichenrichtig unter Bildung eines Mittelwerts (D, D') gemittelt werden und **dadurch gekennzeichnet, dass** eine die mittlere Abweichung vom Mittelwert (D, D') angebende Abweichungsgröße (A, A') errechnet wird, und
- wobei das Fehlersignal (F) erzeugt wird, wenn der Mittelwert (D, D') sowohl einen fest vorgegebenen ersten Grenzwert (G1) als auch einen von der Abweichungsgröße (A, A') abhängigen zweiten Grenzwert (G2) erreicht oder überschreitet.

**Claims**

1.  Method for operating a vehicle,
    wherein

    - using the location data (O) indicating the respective location of the vehicle during the journey and route data (SD), stored in the vehicle, of a route (30) to be travelled according to plan, distance values (di) are calculated which indicate the respective distance of the vehicle from the route (30) to be travelled according to plan during the journey, and
    - a fault signal (F) is generated if the distance values (di) indicate a departure from the route (30) to be travelled according to plan,
    - wherein the distance values (di) or a predefined number (N) and/or selection of distance values (di) are averaged, with the correct sign, to form an average value (D, D'), and
    **characterised in that**
    a deviation variable (A, A') indicating the average deviation from the average value (D, D') is calculated, and
    - wherein the fault signal (F) is generated if the average value (D, D') reaches or exceeds both a first limit value (G1) that is predefined in a fixed manner and a second limit value (G2) that is dependent upon the deviation variable (A, A').

2.  Method according to claim 1,
    **characterised in that**
    the distance values (di) are averaged to form a moving average value (D, D'), by the averaging taking place exclusively by using a predefined number (N) of most recently recorded items of location data (O) and/or exclusively by using location data (O) that has been recorded within a predefined timeframe (T) before the respective point in time of the averaging.

3.  Method according to one of the preceding claims,
    **characterised in that**

    - the distance values (di) are fed into an artificial intelligence (KI) system, which has been trained on the basis of prior journeys and/or simulated journeys, and
    - the fault signal (F) is generated by the artificial intelligence (KI) system.

4.  Method according to one of the preceding claims,
    **characterised in that**

    - the vehicle is a rail vehicle (10) and
    - the route data (SD) is railway track installation data.

5.  Method according to claim 1,
    **characterised in that**
    the standard deviation ($\sigma$) is calculated as deviation variable (A, A').

6.  Method according to claim 1 or 5,
    **characterised in that**
    the second limit value (G2) is formed by multiplying the deviation variable (A, A') by a constant (K).

**7.** Method according to claim 6,
**characterised in that**

- the constant (K) lies between 1 and 5 and/or
- the first limit value (G1) amounts to between 1.5 and 4 metres, preferably 2 metres.

**8.** Method according to one of the preceding claims,
**characterised in that**
the distance value (di) and the fault signal (F) are ascertained by using fault indications (σxi, oyi), which quantify the possible faults in the location data (O).

**9.** Method according to one of the preceding claims,
**characterised in that**

- the distance value (di) is averaged by using weighting factors (wi) and a weighted average value (D') is formed and
- a weighted deviation variable (A') indicating the average deviation of the weighted average value (D') is calculated and
- the fault signal (F) is generated if the weighted average value (D') reaches or exceeds both the first limit value (G1) that is predefined in a fixed manner and a second limit value (G2) that is dependent upon the weighted deviation variable (A').

**10.** Method according to claim 9,
**characterised in that**
the weighting factors (wi) are ascertained by using fault indications (σxi, σyi), which quantify the possible faults in the location data (O).

**11.** Method according to one of the preceding claims,
**characterised in that**

- a driver assistance system (FAS) in a normal operating mode generates control signals (ST) and/or display signals (AS(FF)) for a vehicle driver on the basis of information (If) that is stored in relation to the route (30) to be travelled, and
- the driver assistance system (FAS) is deactivated or switched to a special operating mode if the fault signal (F) is present.

**12.** Method according to one of the preceding claims,
**characterised in that**

- a passenger information system (FIS) in a normal operating mode generates display signals (AS(FG)) for passengers on the basis of information (Ig) that is stored in relation to the route (30) to be travelled, and
- the passenger information system (FIS) is deactivated or switched to a special operating mode if the fault signal (F) is present.

**13.** Method according to one of the preceding claims,
**characterised in that**
satellite-based location data (O) is used to form the distance values (di).

**14.** Method according to one of the preceding claims,
**characterised in that**
implausible distance values and/or implausible measured positions (Pq(xq,yq)) are ignored when forming the fault signal (F).

**15.** Vehicle with a control facility,
wherein

the vehicle has a travel control facility (FKE), which is embodied,

- using the location data (O) indicating the respective location of the vehicle during the journey and route data (SD) of a route (30) to be travelled, to calculate distance values (di) which indicate the respective distance of the vehicle from the route (30) to be travelled during the journey, and
- to generate a fault signal (F) if the distance values (di) indicate a departure from the route (30),
- wherein the distance values (di) or a predefined number (N) and/or selection of distance values (di) are averaged, with the correct sign, to form an average value (D, D'), and **characterised in that**

a deviation variable (A, A') indicating the average deviation from the average value (D, D') is calculated, and

- wherein the fault signal (F) is generated if the average value (D, D') reaches or exceeds both a first limit value (G1) that is predefined in a fixed manner and a second limit value (G2) that is dependent upon the deviation variable (A, A').

**Revendications**

1. Procédé pour faire fonctionner un véhicule, dans lequel

   - avec les données (O) d'emplacement indiquant l'emplacement respectif du véhicule pendant la circulation et des données (SD) de voie (30), mises en mémoire dans le véhicule, d'une voie (30) à emprunter conformément au plan, on calcule des valeurs (di) de distance, qui indiquent pendant la circulation la distance respective du véhicule à la voie (30) à emprunter conformément au plan, et
   - dans lequel on produit un signal (F) d'erreur, si les valeurs (di) de distance indiquent que l'on quitte la voie (30) à emprunter conformément au plan,
   - dans lequel on fait la moyenne des valeurs (di) de distance ou d'un nombre (N) donné à l'avance et/ou d'une sélection de valeurs (di) de distance d'une manière correcte en signe en formant une valeur (D, D') moyenne et **caractérisé en ce que** l'on calcule une grandeur (A, A') d'écart indiquant l'écart moyen à la valeur (D, D') moyenne, et
   - dans lequel on produit le signal (F) d'erreur, si la valeur (D, D') atteint ou dépasse tant une première valeur (G1) limite donnée à l'avance de manière fixe qu'également une deuxième valeur (G2) limite, qui dépend de la grandeur (A, A') d'écart.

2. Procédé suivant la revendication 1, **caractérisé en ce que** l'
on fait la moyenne des valeurs (di) de distance en formant une valeur (D, D') moyenne mobile, par le fait que la formation de la moyenne s'effectue exclusivement en tirant parti d'un nombre (N) donné à l'avance de données (O) d'emplacement détectées en dernier et/ou exclusivement en tirant parti de données (O) d'emplacement, qui ont été détectées dans un laps (T) de temps donné à l'avance avant l'instant respectif où l'on fait la moyenne.

3. Procédé suivant l'une des revendications précédentes, **caractérisé en ce que** l'

   - on met les valeurs (di) de distance dans un système d'intelligence (KI) artificielle, qui a subi un enseignement à l'aide de circulations antérieures et/ou de circulations simulées et
   - on produit le signal (F) d'erreur par le système d'intelligence (KI) artificielle.

4. Procédé suivant l'une des revendications précédentes, **caractérisé en ce que**

   - le véhicule est un véhicule (10) ferroviaire et
   - les données (SD) de voie sont des données d'installation de voie de chemin de fer.

5. Procédé suivant la revendication 1, **caractérisé en ce que** l'
on calcule l'écart-type ($\sigma$) comme grandeur (A, A') d'écart.

6. Procédé suivant la revendication 1 ou 5,

**caractérisé en ce que** l'
on forme la deuxième valeur (G2) limite en multipliant la grandeur (A, A') d'écart par une constante (K).

7. Procédé suivant la revendication 6,
   **caractérisé en ce que**

   - la constante (K) est comprise entre 1 et 5 et/ou
   - la première valeur (G1) limite est comprise entre 1,5 et 4 mètres, en étant de préférence de 2 mètres.

8. Procédé suivant l'une des revendications précédentes,
   **caractérisé en ce que** l'

   - on détermine les valeurs (di) de distance et le signal (F) d'erreur en tirant parti d'indications ($\sigma$xi, $\sigma$yi) d'erreur, qui quantifient les erreurs possibles des données (O) d'emplacement.

9. Procédé suivant l'une des revendications précédentes,
   **caractérisé en ce que** l'

   - on fait la moyenne des valeurs (di) de distance en tirant parti de facteurs (wi) de pondération et on forme une valeur (D') moyenne pondérée et
   - on calcule une grandeur (A') d'écart pondérée indiquant l'écart moyen à la valeur (D') moyenne pondérée et
   - on produit le signal (F) d'erreur, si la valeur (D') moyenne pondérée atteint ou dépasse tant la première valeur (G1) limite donnée à l'avance qu'également une deuxième valeur (G2) limite, qui dépend de la grandeur (A') d'écart pondérée.

10. Procédé suivant la revendication 9,
    **caractérisé en ce que** l'
    on détermine les facteurs (wi) de pondération en tirant parti d'indications ($\sigma$xi, $\sigma$yi) d'erreur, qui quantifient les erreurs possibles des données (O) d'emplacement.

11. Procédé suivant l'une des revendications précédentes,
    **caractérisé en ce qu'**

    - un système (FAS) d'assistance au conducteur produit pour un conducteur du véhicule dans un mode de fonctionnement normal sur la base d'informations (If), qui sont mises en mémoire à propos de la voie (30) à emprunter, les signaux (ST) de commande et/ou les signaux (AS(FF)) d'indication et
    - on désactive le système (FAS) d'assistance au conducteur ou on le met dans un mode de fonctionnement particulier, s'il y a le signal (F) d'erreur.

12. Procédé suivant l'une des revendications précédentes,
    **caractérisé en ce qu'**

    - un système (FIS) d'information de passager produit dans un mode de fonctionnement normal sur la base d'informations (Ig), qui sont mises en mémoire à propos de la voie (30) à emprunter, des signaux (AS(FG)) d'indication pour les passagers et
    - on désactive le système (FIS) d'information de passager ou on le met dans un mode de fonctionnement en particulier, s'il y a le signal (F) d'erreur.

13. Procédé suivant l'une des revendications précédentes,
    **caractérisé en ce que**
    pour la formation des valeurs (di) de distance, on tire parti de données (O) d'emplacement reposant sur un satellite.

14. Procédé suivant l'une des revendications précédentes,
    **caractérisé en ce que** l'
    on néglige les valeurs de distance invraisemblables et/ou des positions (Pq(xq, yq)) mesurées invraisemblables lors de la formation du signal (F) d'erreur.

15. Véhicule comprenant un dispositif de commande,

dans lequel
le véhicule a un dispositif (FKE) de commande de circulation, qui est constitué pour

- calculer, avec les données (O) d'emplacement indiquant l'emplacement respectif du véhicule pendant la circulation et des données (SD) de voie d'une voie (30) à emprunter conformément au plan, des valeurs (di) de distance, qui indiquent pendant la circulation la distance respective du véhicule à la voie (30) à emprunter conformément au plan, et
- pour produire un signal (F) d'erreur, si les valeurs (di) de distance indiquent que l'on quitte la voie (30),
- dans lequel on fait la moyenne des valeurs (di) de distance ou d'un nombre (N) donné à l'avance et/ou d'une sélection de valeurs (di) de distance d'une manière correcte en signe en formant une valeur (D, D') moyenne et **caractérisé en ce que** l'on calcule une grandeur (A, A') d'écart indiquant l'écart moyen à la valeur (D, D') moyenne, et
- dans lequel on produit le signal (F) d'erreur, si la valeur (D, D') atteint ou dépasse tant une première valeur (G1) limite donnée à l'avance de manière fixe qu'également une deuxième valeur (G2) limite, qui dépend de la grandeur (A, A') d'écart.

FIG 1

FIG 2

EP 4 031 434 B1

FIG 3

FIG 4

FIG 5

EP 4 031 434 B1

FIG 6

EP 4 031 434 B1

FIG 7

EP 4 031 434 B1

FIG 8

FIG 9

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10338234 A1
- EP 0831007 A1
- DE 102017210131 A1
- US 2006058957 A1
- US 2017096778 A1
- US 20160216124 A1
- US 20100312461 A1
- DE 102018207634 A1